(19) **Europäisches Patentamt / European Patent Office / Office européen des brevets**

(11) **EP 2 342 164 B1**

(12) **EUROPEAN PATENT SPECIFICATION**

(45) Date of publication and mention
of the grant of the patent:
**27.03.2013 Bulletin 2013/13**

(21) Application number: **10793292.3**

(22) Date of filing: **27.09.2010**

(51) Int Cl.:
*C02F 1/66* (2006.01)     *C02F 1/72* (2006.01)
*C02F 9/00* (2006.01)     *C02F 11/06* (2006.01)
*C02F 101/20* (2006.01)     *C02F 101/30* (2006.01)

(86) International application number:
**PCT/IB2010/002418**

(87) International publication number:
**WO 2011/036550 (31.03.2011 Gazette 2011/13)**

(54) **PROCESS FOR THE DISPOSAL OF WASTES, PARTICULARLY OF SLUDGES DERIVING FROM WASTE WATER DEPURATION**

VERFAHREN ZUR ABFALLENTSORGUNG, INSBESONDERE FÜR AUS ABWASSERBEREINIGUNG GEWONNENE SCHLÄMME

PROCÉDÉ POUR L'ÉLIMINATION DE DÉCHETS, EN PARTICULIER DE BOUES PROVENANT DE L'ASSAINISSEMENT D'EAUX USÉES

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**
Designated Extension States:
**BA ME RS**

(30) Priority: **28.09.2009 IT RM20090494**

(43) Date of publication of application:
**13.07.2011 Bulletin 2011/28**

(73) Proprietor: **Newlisi S.p.A.**
**20121 Milano (IT)**

(72) Inventor: **MONTEMURRO, Michele**
**I-00034 Colleferro (Roma) (IT)**

(74) Representative: **Bottero, Carlo**
**Barzanò & Zanardo Milano S.p.A.**
**Via Borgonuovo, 10**
**20121 Milano (IT)**

(56) References cited:
**WO-A1-2005/077835     CA-A1- 2 531 169**
**US-A1- 2005 274 678**

**Description**

The present invention concerns a process for the disposal of wastes, particularly of sludges deriving from waste water depuration.

In more detail, the invention concerns a process for the disposal of wastes, particularly of sludges deriving from waste water depuration, by chemical means, until their substantially complete elimination. Any exhausted sludge that may remain at the end of the treatment possesses all the physical, chemical, organoleptic and microbiological characteristics for being used, for example, in the agronomic field, as a natural biological fertilizer.

Currently the controlled disposal of all types of waste is regulated by EU Directives and regulations which the Member States are obliged to incorporate and apply in their territory. According to current legislation, waste is classified into the following types: (i) solid urban (or comparable) waste, and (ii) special waste; the latter, in its turn, is divided into non-hazardous special waste and hazardous special waste. Waste which because of its particular chemical, physical and/or organoleptic composition is classified as hazardous waste, must go through a differentiated disposal process.

The predominant process, which is the oldest and universally practised to this day for waste disposal in every country in the world, is transferring it to landfill, because this process offers natural degradation of the organic constituents and makes it possible, albeit over an extremely long timescale (about 25 years) to arrive at the total breakdown and mineralization, by a process of natural oxidizing fermentation, both of the organic carbon fraction, which is oxidized to the stage of maximum oxidization ($CO_2$) and of the other essential components such as nitrogen, phosphorus and hydrogen. Disposal in landfill was the very earliest process used throughout the world, because it is simple, practical and (once upon a time) cheap. Currently, however, because of the more rapid exhaustion of the landfill sites in use and also because of the negative ecological, health and environmental side-effects, people have become aware of the need to develop alternative technologies, such as fertirrigation, bio-composting and other alternative rapid disposal technologies (biogasification, thermodestruction, waste-to-energy processes, pyrolysis and others).

In economic terms, however, both the traditional process of disposal in landfill, and rapid disposal technologies, which have arisen over time as an alternative to landfill and had promised better results at considerably lower cost, have shown themselves in operation to be less and less advantageous, given that the sum of the direct and indirect costs is very expensive and not always justified, and the corresponding final operation generally shows a loss.

Each of these alternative rapid disposal technologies, over the course of what is now many years' operation, has manifested undeniably negative side-effects, sometimes very serious, both in regard to the surrounding environment (crops, soil, pasture, water tables etc.) and in regard to human health (internal employees, population living in the surrounding area etc.), as well as to the animals which feed on that vegetation and, in the final analysis, to the food chain as a whole.

As regards fertirrigation, this is a process applied essentially only to non-hazardous special waste, consisting in direct scattering of the waste in controlled doses over a soil suitable for receiving it. On the one hand this technique requires a modest structure and a relatively simple operation, with a very small economic investment and medium-low running costs, but on the other hand the disadvantages are considerable, this being a hazardous procedure both for the operator on account of the very high microbial charge, and for the environment because of the malodorous and toxic exhalations, the pollution of the surface soil, the pollution of even possibly deep phreatic water-table, and the accumulation of biotoxic and potentially carcinogenic heavy metals in the vegetation (food chain). Furthermore, the soil becomes a repository for insects, birds and rodents and the procedure can be practised only in particular periods of the year and in particular concentrations of use in proportion to the area treated.

As regards biocomposting, this is indicated for special waste classified as non-hazardous which has been previously detoxified. It consists in the production of organic-biological compost with low fertilizing and improving action, and must be mixed before use with about 70% good quality vegetable matter (generally cellulose derivatives). Although on the one hand this process is characterized by relative technical, operative and organizational simplicity, on the other hand it requires good availability of prime vegetable material of exclusively biological origin. Furthermore, good returns are obtained only if the resulting compost is marketed as a niche product. This compost, furthermore, cannot replace traditional fertilizers, given its low total fertilizing value, and has a high sale price compared with the actual performance it delivers, and it must, furthermore, be used in conjunction with traditional fertilizers.

With reference to traditional thermocombustion, this is a treatment reserved for non-hazardous special waste, consisting of incineration, with the combustion gases being emitted directly into the environment. Though on the one hand this technology is fairly simple, on the other it is also a superseded and disused technology, because of the direct emission into the atmosphere of all the volatile materials produced in combustion, including those which are in fact hazardous for the environment, for the food chain and for human health. This technique, furthermore, produces toxic and hazardous slag which must be disposed of in landfill, with additional costs. Finally, the running costs are high, both because of the failure to recover the energy, and because the slag has to be disposed of in landfill.

As regards waste-to-energy, i.e. incineration of waste with partial energy recovery, this method can be applied to non-hazardous special waste, but is however more indicated for solid urban waste. One of the problems connected with this technology is the fact that the combustion gases liberated into the surrounding atmosphere carry volatile substances classified as teratogenic or carcinogenic: volatile heavy metals, dioxins, furans, polycyclic aromatic hydrocarbons (PAHs) and polychlorobiphenyls (PCBs). There is also experimental and practical evidence that these substances enter the human and animal food chain because they fall back on the territory surrounding the source of the emission. This can also cause respiratory discomfort in the population involved. Toxic and hazardous slag is also produced during thermocombustion, which must anyway be disposed of in controlled landfill, with extra costs. The operating costs are considered to be high in spite of the energy recovery, and the fixed investment costs are very high, as the structures are of large dimensions.

With reference to gasification, this technology is applicable to special refuse provided that it is not hazardous, and leads to production of methane and carbon dioxide, generated by anoxic fermentation of organic carbon. This technology is more suitable for the treatment of scrap woody vegetable substances and animal excrement from intensive farming, at a high titer of organic carbon. Furthermore, although this process enables a sizeable production of alternative energy (methane), even from scrap material and waste, with limited running costs, on the other hand this technology is only theoretically simple, and turns out to be problematic in operation, bringing in seesawing yields which are much lower than those declared by the suppliers. There are in fact many factors which affect the results, such as for example the quality of the raw material, and also the seasonal variation in the outside temperature. In addition, this technology requires high initial investment and continuity of supply of large quantities of organic material to treat; it requires the use of good quality biomass, with a high level of lower calorific power (LCP), preferably including vegetable matter with a high organic carbon content. Although usable, the technology is not really suitable for the disposal of excess biological sludge. Furthermore, it produces hazardous slag resulting from the anoxic treatment, which must anyway be disposed of in landfill at the end of the cycle, with additional costs.

Cannibalization, a technology usable only for the treatment of excess biological sludge, is an alternately oxidizing/anoxic biological treatment carried out on the excess sludge recirculated between the biological oxidization tank and an external unit with anoxic activity. While on the one hand it appears to be a clean technology from an environmental and health point of view, besides being an on-line process on the site, on the other hand it enables a relatively modest (40%) reduction in excess sludge. In relation to the results achieved, in any event, the cost of the treatment is high and the operation of the technology is fairly demanding, especially if the high fixed investment required are also considered.

Finally, ozonization is a technology usable only for excess biological sludge, and consists of a powerful oxidizing action performed with ozone ($O_3$), produced on site from a suitable electric arc ozonizing apparatus acting on air or vaporized liquid oxygen. While on the one hand this technology is clean in environmental and health terms, and is operable on-line on site, on the other hand in this case too the reduction in excess sludge obtained is relatively modest (40%), and furthermore the cost of the treatment is anyway high in relation to the results achieved, especially if the high fixed investment required are also considered.

In conclusion, the negative side-effects that can be held against all the above rapid disposal treatments are attributable essentially to the formation of by-products which are emitted into the atmosphere, which over time have been found to be toxic or mutagenic or teratogenic or directly carcinogenic, because they are only partially trapped by the final filtration system. Among the most heavily incriminated substances are: polycyclic aromatic hydrocarbons (PAHs), dioxins of various composition, polychlorobiphenyls (PCBs), furans (TE) and volatile inorganic micropollutants, made up of heavy metals of proven toxicity (cadmium, lead, tin, zinc and others). The negative effects on the surrounding population are indubitable and are clarified by serious epidemiological studies, carried out in Italy and elsewhere on the populations and surrounding areas of sites in operation.

Finally, due weight should be given to the ecological-environmental consideration, that said rapid disposal processes release as a by-product of the process a special waste classifiable as hazardous, since it is made up of inorganic salts of heavy metals and of their complex derivatives, such as chromium, manganese, nickel, copper and other transitional elements, for which, at the present moment, no other ways of safe disposal are known except for landfill.

Besides urban waste (SUW), another sector producing a major weight of waste of organic-biological derivation is that of treatment of polluted water (waste water), of both urban and industrial origin. In fact, in these processes a considerable quantity of waste or excess biological and/or chemical-biological sludge is produced, which is inherent and impossible to eliminate and whose qualitative and quantitative composition is variable, depending on the depuration process from which it comes. In fact each type of treatment, and also each technology adopted, can produce a different quality and quantity of excess sludge.

The chemical-physical depuration process produces an organic-inorganic excess sludge, essentially made up of hydrated lime together with smaller quantities of inorganic primary flocculants (iron (II), iron (III), aluminium salts etc.) and organic polyelectrolytes, added to improve the flocculation-sedimentation phase. The average quantity of sludge produced by these processes is estimated at 4-10 kg of dry matter per cubic metre of waste water treated, but can reach as much as 20 kg/m$^3$ in some special sectors (e.g. paper, fats, detergents).

The biological process of depuration produces a biological-organic excess sludge, with a very complex composition, part of which is represented by a considerable protein fraction of variable molecular weight, generally combined with glucosidic units (glycoproteins) and lipids (lipoproteins), of which the average quantity produced is directly proportional to the incoming organic charge (BOD) and is estimated on average to be 4 kg/m$^3$ of depurated waste water.

The mixed process (chemical-physical + biological or vice versa) is applied in a smaller number of cases, specifically when the incoming organic charge is particularly high, or when the pollutants present in the waste water are poorly biodegradable; the types and quantities produced are highly variable and therefore not classifiable.

The excess sludge, classified according to the current regulations as special waste, depending on the content of elements classified as toxic or harmful present therein, can in turn be further classified as: (i) hazardous special waste, if it exceeds the maximum permitted threshold for toxic substances present therein, or (ii) non-hazardous special waste, if it does not exceed the maximum permitted threshold for toxic substances present.

The sludges produced following depuration of waste water, in order to be able to be sent for disposal, require a pre-thickening/concentration, and subsequently a dewatering treatment by means of filtration, both treatments ultimately having the aim of increasing the content of total solids (TS), and therefore of reducing the volume and the weight of the sludge. After these treatments, the sludge is finally sent for controlled disposal, in the same way as all the other waste.

Since in the current state of the best technical knowledge, no economically advantageous process has yet been found for reusing this excess sludge, its inevitable disposal in a controlled regime, with whatever system or technology in current use it is performed, including disposal in landfill, represents a significant economic passive cost to the operator. Among the various options, disposal in landfill today represents one of the most economically disadvantageous choices, albeit very often obligatory, both when it is necessary to dispose of the toxic wastes remaining from the treatment of the waste with other technologies/types of disposal, and to allow the disposal of waste in areas not served by alternative technologies.

Irrespective of the efficiency and efficacy of the various disposal technologies in current use, the process of disposal in controlled landfill represents, even today, still the dominant solution, notwithstanding that it is not the cheapest.

Disposal of the excess sludge, in the depuration process for waste water and sewage, represents in terms of economic impact the largest debit entry in the entire cycle: in fact, it accounts for more than 50-55% of the entire cost of the depuration process.

It is altogether normal, therefore, that research interest should today be concentrated predominantly on the following aspects: (i) reducing the unit cost of treatment; (ii) minimizing the quantity of sludge produced in the depuration process; (iii) minimizing/eliminating the collateral ecological, environmental, social and health problems.

In the light of the above, it seems evident that there is a necessity to have available a process which is capable of satisfying all the needs just indicated, and of providing an alternative which is not only extremely effective, but also an improvement both from the technical and technological, and from the ecological, health and economic points of view, and thus to eliminate those serious problems which have manifested themselves over time as disadvantages of the known rapid disposal technologies.

This is the context into which the solution according to the invention fits, proposing to provide an alternative which is an improvement, from the technical, ecological and economic points of view, over other known and currently used technologies, by comparison with which it boasts the following additional and improving characteristics:

- superior effectiveness in reducing the weight of the waste;
- superior cheapness of the process;
- total absence of ecological, environmental, hygienic and health problems caused to the surrounding environment, the resident population, animals or vegetation and therefore to the food chain itself;
- total safety of personnel employed at the plant;
- agronomic enhancement of any exhausted residue which may be present at the end of the treatment.

In particular, the process of the invention is applicable in numerous fields in organic chemistry, ecology, environmental protection, rehabilitation of polluted sites, waste treatment and any other case in which breakdown, dissolution (also partial), and/or modification of the chemical structure and obtainment of simpler molecules with much higher biodegradability may prove useful or advantageous.

Unlike the accelerated destructive technologies which we have discussed above, which are based either on rapid thermal destruction (simple thermocombustion and waste-to-energy), or on bio-gasification of the organic carbon material (biogas) over a relatively long period of time (about 30 days), the process which is the subject of the present invention is differentiated from these by the following peculiar aspects:

a) it chemically oxidizes to $CO_2$ a far-from-negligible fraction of the organic carbon in the waste treated, varying between 25% and 40% of the dry matter, depending on its quality and type;

b) it structurally modifies the remaining fraction, resulting at the end of the treatment, which takes place in an aqueous environment, in an eluate containing, essentially, rapidly and totally biodegradable solutes completely dissolved in a clear aqueous solution;

c) at the end of the process, the residual material, in the form of an insoluble body which may be present, consisting essentially of inert vegetable material drawn in (soil, vegetable cellulose, insoluble food fraction, other insoluble substances, generally vegetable) can be eliminated by simple filtration or sedimentation or mechanical pressing;

d) said exhausted material, which may be left over from the process, with reference to the laws governing agronomic use, is identified as: "non-hazardous special waste", with characteristics complying with what the regulations specify for compostable waste. Said material is thus a product fully usable for agronomic purposes.

An aim of the present invention is therefore to provide a process which makes it possible to overcome the limits of the solutions according to the known technology and to obtain the technical results described above.

A further aim of the invention is that said process may be implemented with substantially contained costs, both as regards the startup costs and as regards the operating costs.

Not the least of the aims of the invention is to create a process which is substantially simple, secure and reliable.

According to a first aspect, therefore, the present invention concerns a process for waste disposal, which comprises:

- performing an acid oxidizing hydrolysis of the incoming waste (charge);
- performing an alkaline oxidizing hydrolysis of the outgoing mass from the acid oxidizing hydrolysis;
- chemically conditioning the outgoing mass from the alkaline oxidizing hydrolysis by the addition of an acid reagent;
- separating any undissolved residue.

Further characteristics of the process according to the invention are specified in the successive dependent claims attached to the present description.

The efficacy of the process of the present invention is evident: it has shown itself to be particularly effective in the destructive or reductive treatment of a vast number of scrap and/or waste and/or excess solid and liquid substances, which are classified as special waste, both of organic origin, sometimes complex, and of inorganic and/or mixed origin, and also of natural, artificial or synthetic origin.

The process of the present invention, while being particularly suitable for the treatment of special waste, and in particular of sludge deriving from the depuration of waste water, can be applied to the treatment of a huge range of waste, such as, by way of example which is not exhaustive: organic fraction of solid urban waste (OFSUW); water from industrial processing; organic scrap and trimmings from food processing; vegetable water from milling; scrap from grape pressing process, acetification process and fermentation and alcoholic distillation process; percolate from landfill; serums from cheese-making process; sediments; sewage from cesspools; even residual waste from waste treatment carried out using other technologies, such as for example: production of biogas obtained by anoxic fermentation of organic fractions; incineration of SUW; pyrolysis of organic fractions and so forth.

The process of the invention offers the notable advantage of successfully breaking down, chemically demolishing, structurally transforming, dissolving and finally reducing the weight of these special wastes, in some cases to the point of eliminating them completely, preferably at the same site as where they are produced. In particular, in the case of the disposal of sludge deriving from the depuration of waste water, the process according to the present invention can advantageously be continuously performed and be integrated into the same depuration cycle as the primary waste water treated on the site. In this way it is possible to eliminate costs and risks connected with the habitual operations which accompany such wastes: handling, internal movement, transport, storage, disposal etc. Alternatively, the process can be performed at special treatment sites where the wastes to be treated come from other production sites.

The process according to the present invention makes it possible to obtain a very marked reduction both in the weight and the volume of the waste undergoing the treatment, in a simple, effective, ecological, hygienic, sanitary and economical manner.

The process of the present invention, furthermore, is particularly useful and advantageous when there is a need to treat sewage or waste with a low degree of biodegradability (BOD), a very frequent characteristic of so-called "hard" (i.e. biologically resistant) synthetic or semi-synthetic substances, which are hardly or not at all biodegradable.

In particular, in comparison with all the other technologies known and already in use, the process according to the present invention does not produce and does not emit into the atmosphere any type of exhalation, because the plant is closed-cycle.

Furthermore, depending on the type and origin of the waste treated, at the end of the process there may remain a modest quantity of exhausted solid product which is not further reducible, which is classifiable as "Non-hazardous special waste", with characteristics complying with what is specified for composts by the Decree of the Minister of the Environment of 5/2/98, Ministerial Decree no. 186/06 and Legislative Decree no. 99/92, Annexes 1A-1B, and decisions 2001/118/EC, 2001/119/EC and 2001/573/EC.

Therefore, even if there remains a solid residue at the end of the treatment, this residue is utilizable as a soil improver/fertilizer which can be spread by fertirrigation directly on the soil, following what is established by Legislative Decree no. 99/92, Annexes 1A-1B; or as a product suitable for the production of bio-compost; product disposable as waste comparable to urban waste.

The present invention will now be described, by way of illustration which is not limiting, according to a preferred embodiment wherein the incoming waste consists of sludge deriving from the depuration of waste water (so-called "excess sludge") with particular reference to the drawings in the attached illustrations, in which:

- figure 1 shows a block diagram which illustrates the different stages of the process according to the present invention,
- figure 2 shows a diagram of reaction time, expressed in minutes, versus pH value, at a fixed temperature of 70°C, in the acid oxidizing hydrolysis stage of the process of the present invention,
- figure 3 shows a diagram of reaction time, expressed in minutes, versus pH value, at a fixed temperature of 70°C, in the alkaline oxidizing hydrolysis stage of the process of the present invention,

- figure 4 shows a diagram of reaction time, expressed in minutes, versus temperature 70°C, in the acid oxidizing hydrolysis stage (pH=3) of the process of the present invention,
- figure 5 shows a diagram of reaction time, expressed in minutes, versus temperature 70°C, in the alkaline oxidizing hydrolysis stage (pH=11) of the process of the present invention.

The process according to the present invention allows the reductive treatment of waste, and particularly of excess sludge, in accelerated acceptable times, comparable to the total times for the thermo-destructive treatment.

The process conditions stated in the detailed description which follows, although referring specifically to the treatment of excess sludge, can however be applied to the treatment of waste in general. Small modifications to these conditions may be made on the basis of the experience of the average technician, depending on the specific waste treated.

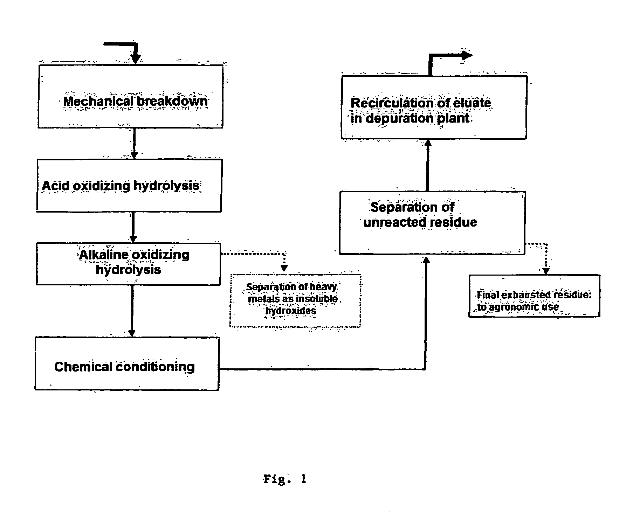

With reference to figure 1, the general scheme of the treatment process according to the present invention comprises in general a first stage of preliminary mechanical breakdown, performed directly on the incoming excess sludge, subjecting said sludge to a vigorous chopping, in order to defibre/tear the substances with a solid consistency and to produce cellular tearing of the biomass, with the resulting intracellular material leaking out. However, this stage is not always strictly necessary, especially in small plants, but it makes it possible to reduce the execution time of the subsequent stages and/or to obtain higher efficiency.

The next stage is an acid oxidizing hydrolysis, carried out on the already defibred sludge, for the purpose of oxidizing directly to carbon dioxide all the substance susceptible to oxidization in the process conditions, as well as chemically modifying the residual unoxidized material, generally consisting of structured polysaccharide compounds, represented by medium and high molecular weight cellulose derivatives (crystalline and/or amorphous cellulose), undigested vegetable cellulose of alimentary origin (greens, fruit and similar), other lower polysaccharides, including glycosidic compounds, susceptible to being hydrolyzed in shorter chains by acidic hydrolysis, in order to hydrolyze the ether bonds and liberate the aglycones linked to them; glycerids and other esters, consisting of long-chain fatty acids, generally of alimentary origin (fats and oils), linked to the glycerol with one or more radicals R (where $R > C_6$), but also of simple esters, linear and/or ramified, from various sources, among them the fish food-chain and synthetic lubricants; the complex proteins, among them glycoproteins, lipoproteins, phospholipids, amino sugars and sulphoproteins; sulphurated substances, among them the sulphitated ($R\text{-}OSO_2\text{-}R'$), sulphatated ($R\text{-}OSO_3\text{-}R'$) and sulphonated ($R\text{-}SO_3R'$) compounds, where R is a generic organic radical and R' can be hydrogen (H), a metal (M) or any other organic and/or inorganic radical; thioderivative organic compounds, thioalcohols, thioethers, mercaptans, sulphoxides, sulphones etc; inorganic reducing compounds, such as elemental sulphur, sulphides, sulphites, thiosulphates, tetra-ionates, hydrosulphites etc; other substances with a reducing action, hydrazine and derivatives, hydroxylamine and derivatives, phosphine and derivatives, phenolic and polyphenolic derivatives, transition (so-called heavy) metals with lower valency and all other compounds of a reducing nature, susceptible to being oxidized at a higher valence in the reaction environment; substances with an oxidizing action: active zero valent halogens (for example active chlorine) and their organic derivatives (chloramines) and inorganic derivatives (hypochlorites, chlorine dioxide etc.); oxidizing compounds of nitrogen, phosphorus and sulphur, as well as of manganese, chromium and other heavy transition metals with higher valency and an oxidizing character; all other organic and/or inorganic compounds with an oxidizing character and capable of disturbing the normal activity of biomass; humic and fulvic acids; all other compounds known and unknown, susceptible to modification in the reaction environment.

There follows a phase of alkaline oxidizing hydrolysis, performed for the purpose both of hydrolyzing, by saponification, those complex substances, among them the aglycones liberated in the previous acidic phase, generally belonging, by way of example, to the classes indicated below, and of precipitating the heavy metals (transition elements) oxidized at higher valence, whose hydroxides are generally less soluble in an aqueous environment and which are therefore separated by flocculation, sedimentation and filtration: organic compounds having an amide link (-CO-NH-), complex cellular proteins, simple proteins (peptose, peptones), until the reaction is pushed into the obtainment of free amino acids and, finally, free ammonia (this occurring if the treatment time is excessively prolonged), other amide compounds including synthetic; organic compounds saponifiable with an ester link (-COOR); triglycerides of vegetable and animal fats and oils not hydrolyzed, or only partially hydrolyzed, in the previous acid phase, vegetable and animal phosphatides with different nitrified terminal radical and/or different fat radical, organic phosphorated, phosphonated, phosphatated compounds and similar; alkaline oxidization of the glucosidic and glycosidic compounds; beta-alkoxy elimination is used to obtain the progressive peeling of the terminal glucosidic chains of the cellulose derivatives, which are immediately oxidized to carboxylic molecules with low molecular weight, among them iso- and meta-saccharinic acids; by extending the treatment times or increasing the concentration of alkaline reagent (increasing the pH), it is possible to continue the reaction so as to breakup of the glucosidic compounds which have been formed, with various possible rearrangements which are difficult to control; any other compound, known or unknown, susceptible to modification in the reaction environment.

The outgoing charge from the alkaline hydrolysis stage, optionally deprived of any insoluble metal hydroxides which may have separated from the liquid phase as better described below, is then subjected to a stage of chemical conditioning. It has been noted, in fact, that a reduction in the pH from a value of about 11.0-12.0 at the end of the alkaline hydrolysis stage to a value between 3.5 and 5.5 noticeably improves both the coalescence/flocculation stage and the speed of sedimentation of the final exhausted, i.e. unreacted, residue. After the removal of the insoluble metal hydroxides, therefore, the eluate undergoes pH correction, to the desired value comprised between 3.5 and 5.5, with the addition of an acid reagent, preferably sulphuric acid, which is not volatile.

It should be noted that this chemical conditioning is equally advantageous in the event that, after the subsequent stage of separation of the undissolved residue, the resulting eluate is recirculated upstream, namely into the depuration process which is the source of the sludges. In fact, without this conditioning, the eluate would end up at a very alkaline pH value (11.0-12.0), which would not be suitable for being recirculated directly into the tanks or units used for the biological treatment, which operate at a much lower pH range, around neutrality and generally comprised between 7.0 and 8.5.

After the conditioning stage, the mass passes to a stage of separation of the undissolved residue. This stage can be carried out, for example, in a static sedimentation tank where any undissolved residue still remaining can separate by decantation. The addition of a cationic polyelectrolyte can further accelerate the decantation stage and considerably enlarge the structure and size of the flocks in the residue. However, because of the very small amount of residue generally present at the end of the treatment cycle according to the invention, the static sedimentation operation can be superfluous, as it is much simpler, more practical and cheaper to subject the mass to a simple bag or other kind of filtration, according to filtration techniques already known and in use.

Finally, as explained above, there may possibly follow a stage of recirculation of the eluate into the primary depuration process, in cases where the sludge is treated on site. The filtered eluate, i.e. deprived of the residual unsolubilized sludge, is recirculated in the same biological depuration plant as the primary waste water, with which it can mix in the following sections: (i) in the primary storage/equalization tank; or (ii) in the chemical conditioner together with the incoming primary waste water; or (iii) in the biological section (active sludges, biodiscs, percolators, aerated ponds, etc.).

Example 1. Detailed analysis of the process stages

To review now all the stages of the process in more detail: the preliminary mechanical breakdown stage can be performed for the purpose of using mechanical laceration or defibring of the cell membranes to extract the largest possible quantity of intracellular liquid and, at the same time, to increase to the maximum the contact area of the vegetable fraction in the excess sludge, in order to better prepare the sludge for the subsequent stages of treatment. For example, it is possible to proceed to a preliminary mechanical beating, which can be carried out in cold conditions or, even better, in hot conditions: best if it is within 65°C and preferably at an acid pH, because the acidified sludge tends to fluidize noticeably, allowing greater mechanical effectiveness in defibring and therefore shorter treatment times. This operation may be performed with any known device (ball mill, beater system, with gears etc.) and can last from a few seconds to several minutes, depending on the speed of rotation of the disintegrator used and the physical consistency of the sludge treated.

The next stage of acid oxidizing hydrolysis is performed for the purpose of hydrolyzing the already defibred mass in an acid environment. It is preferably performed at an acid pH comprised in the range 0.1 to 5.0, more preferably between 2.5 and 3.5. The charge is preferably heated to between 35° and 100°C (more preferably between 60° and 75°C), with more or less mild mechanical agitation (70-125 rpm is sufficient) or even simple aeration. This stage can in general last from 60 to 90 minutes, preferably however as long as possible, to be sure that total extraction of the intracellular liquid and total hydrolysis of the vegetable products have taken place.

The acidity of the reaction environment can be indifferently provided by any inorganic and/or organic compound with a sufficient acid action, among them, purely by way of non-limiting indication: binary halogenhydric acids (hydrochloric, hydrobromic, hydroiodic, hydrofluoric), ternary oxygenated acids of nitrogen, phosphorus, sulphur, halogens; acid sulphates and phosphates of soluble alkali and/or alkaline-earth metals; simple and/or substituted organic acids:

oxalic, malonic, succinic, glutaric, adipic, tartaric, malic, maleic, fumaric, formic, acetic and halogen-substituted acetic; benzoic acid and/or substituted with one or more activating groups: nitrous, sulphuric, sulphate, carboxylic, phosphonic, halogenhydric; sulphonated, sulphatated, sulphitated, phosphonated, phosphatated and phosphitated organic acids of alkylbenzene, alkylphenol, alkyl and naphthalene; phenol and its derivatives, including those substituted with usual activating groups.

The oxidizing reaction is preferably performed by inclusion in the reaction medium of at least one of the following oxidizing agents.

a) Molecular oxygen, for example by insufflation with air. In larger treatment plants, insufflation with air can be replaced, for reasons of economy, with administration of liquid oxygen, regasified on site. Molecular oxygen in an acid environment gives rise to a redox semipair of considerable force, according to the semireaction indicated below, capable in the envisaged treatment time of oxidizing numerous substances with a reducing action:

$$O_2 + 4H^+ + 4e^- \rightarrow 2H_2O \quad E_0 = 1.229 \text{ Volt}$$

b) Oxidizing agent of peroxide type, organic and/or inorganic, among them, purely by way of non-limiting example:

- inorganic peroxy compounds: ozone, compounds of boron (perborates), carbon (percarbonates), urea (perurea), sulphur (peroxymonosulphate and peroxydisulphate), phosphorus (peroxyphosphates), hyperoxides, hydrogen peroxide ($H_2O_2$), whose reaction in the acid treatment environment can follow either the route of simple oxide-reduction or the addition of the oxygen atom, depending on the characteristics of the acceptor, according to the reactions:

$$H_2O_2 + 2H^+ + 2e^- \rightarrow 2H_2O \quad E_0 = +1.776 \text{ Volt}$$

$$H_2O_2 + 2H^+ + 2e^- \rightarrow \text{oxygen addition reaction}$$

- organic compounds of peroxidic character: peracids (R-CO-OO-H), mono alkyl peroxides (R-OO-H), dialkyl peroxides (R-OO-R'), acyl peroxides (R-CO-OO-CO-R'), cyclic peroxides, ozonides, any other peroxide;
- non-peroxidic inorganic oxidizing compounds: compounds of manganese, chromium, iodine, fluorine, bromine, chlorine, nitrogen, lead, silver, cobalt, cerium, xenon, iron, selenium; nascent oxygen, hydroxyl radicals generated in situ by strongly oxidizing systems, among them Fe(II) + $H_2O_2$ (Fenton's reaction) or activation of persulphates with silver salts.

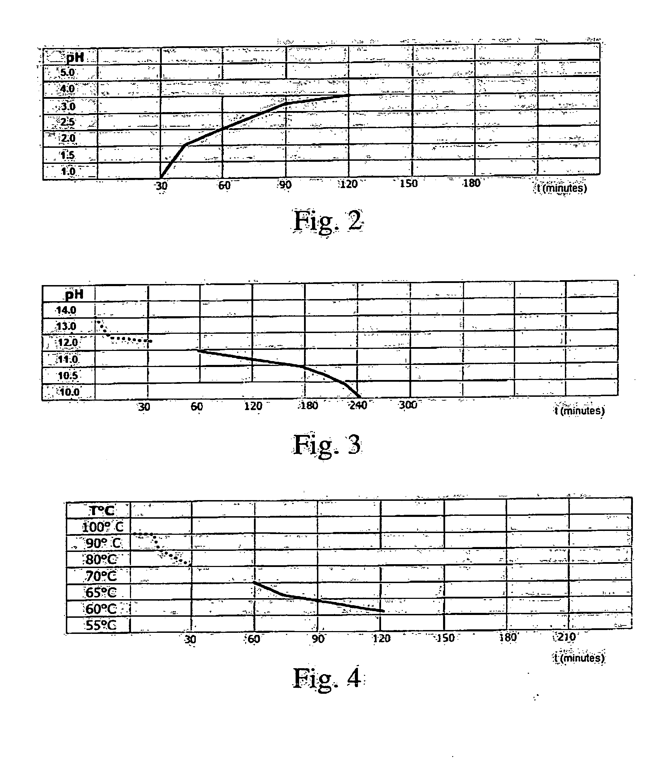

The total reaction time is noticeably conditioned by the following factors: (i) strength of the acidifying reagent used; (ii) strength of the oxidizing reagent used; (iii) working temperature. The influence of these factors on reaction effectiveness is shown in Figures 2 and 3.

With reference to the alkaline oxidizing hydrolysis stage, this treatment is performed in a medium basic environment, preferably in the pH range comprised between 8.0 and 12.0. Preferably the process is conducted under gentle mechanical agitation and with heating of the mass preferably to between 40° and 100°C (more preferably between 60° and 75°C). The alkalinity of the reaction environment can be indifferently provided by any organic and/or inorganic compound with a strongly basic reaction, among them, for purely indicative purposes: hydroxides of alkali and/or alkaline-earth metals; oxygenated ternary salts: carbonates, silicates, borates, phosphates, etc.; organic compounds with basic reaction: alcoholates, etc.

The oxidizing reaction in an alkaline environment is produced by the simultaneous presence of an oxidizing agent, of the same type as those indicated for the acid oxidizing hydrolysis.

The reaction times are conditioned both by the pH value of the environment, and by the working temperature, as represented in figures 4-5.

If heavy transition metals are present in the treated sludge, which are generally undesired because of their high toxicity, already oxidized in an acid environment at the upper valency less soluble in an aqueous environment, a separation can be carried out of said heavy metals, which are present as hydroxides. The molar concentration is that deriving from the solubility product (Ksp), whose value is further reduced as a result of the molar concentration of hydroxide ions ($OH^-$), which generate the alkaline environment. These insoluble hydroxides are extracted as a precipitate, i.e. a slurry on the bottom, and sent for differentiated disposal.

The mass resulting from the previous treatments is then conditioned, under mechanical agitation, by the addition of an acid reagent so that it reaches preferably a pH value of between 3.5 and 4.5. This range favours flocculation and the final sedimentation of any exhausted undissolved residue, if any.

After conditioning, the mass is sent to the next separation stage, carried out in general by sedimentation or direct filtration. Where it is desired to accelerate even more the sedimentation of this residue, it is possible to resort to the addition of small quantities of a polyelectrolyte aqueous solution.

After separation, the residue may optionally be subjected to pressing, by means of usual devices, for the purpose of extracting the largest possible quantity of water present and physically separating the moist exhausted residue for sending for agronomic use, or, because of the small final quantity, it can be suitably filtered in a bag filter or other similar device. All the water collected, both from pressing and from filtration, is combined with the eluate which can be recirculated, as will be more fully specified below.

When the process according to the invention is conducted on excess sludge directly on the site on which the depuration of the waste water takes place, the eluate can advantageously be recirculated in the same waste water depuration treatment plant as the incoming primary waste water, with which it can be mixed, or it can be directly sent to the biological section of the same plant (active sludge, percolation, biodiscs, etc.).

Example 2. Process yield

The process according to the present invention demonstrated the following yields, namely weight reduction of the dry matter of the excess sludge between entry and exit from treatment, using the following simple weight formula:

$$R\% = 100 \ (P_i - P_s)/P_i = 100 \ (P_c \ SST\% - P_s)$$

where:

R% represents the percentage weight reduction of the total dry matter in the excess sludge subjected to treatment;
$P_i$ is the weight of the initial dry matter;
Pc is the weight of the excess sludge sample subjected to the treatment test;
$P_s$ is the weight of the final residual solid, filtered, washed and dried at 110°C until it reaches a constant weight;
SST% is the percentage of total dry matter determined for the excess sludge, by drying an average representative sample until it reaches a constant weight, expressed as follows:

SST% = (Weight of dried sample /Weight of initial sample) * 100

a) Weight reduction referred to the dry matter: this reduction varies from a minimum of 84% to 100%.
b) Weight reduction referred to the pressed product in the moist shovellable state: when it is desired to refer not to the reduction in the total dry matter (TDM) but to the total reduction in the dehydrated shovellable moist mass (which after all, in fact, is the residual mass to be disposed of), because of the superior draining power (i.e. release of free water) of the exhausted final residue after the treatment compared with the original excess sludge, as such and not treated, the effectiveness of minimization rises from the above-mentioned minimum of 84% to 92%. This greater yield obtainable for the dehydrated sludge, compared with the yield stated in point a) above, is solely to be attributed to a drainability, i.e. to a larger unit quantity of free water released, such that the dry matter content is considerably superior after the treatment.

These results have been repeatedly confirmed using the same type of sludge in the laboratory tests carried out on batches and in dynamic tests, carried out both on a pilot plant and on a full-scale plant; the values found are in fact perfectly consistent among themselves, within a maximum deviation of $\pm 1\%$.
Actually, it has been observed that the yields of the process according to the invention are affected to only a negligible extent by the content of the extractable organic substance, on the contrary they are affected by the quantity of inert residues present originally in the treated raw waste water. More precisely, the effect is conditioned by the presence of non-hydrolyzable or only partially hydrolyzable material and by the content of inert substances drawn in: soil, vegetable residues, undissolved alimentary cellulose, crystalline vegetable cellulose, vegetable peel, foliage and various other extraneous substances, which in the conditions of the process may prove to be insoluble.
c) Possible further reduction of the residue by partial drying: in cases where it may be advantageous because of the large quantity of sludge produced (large plants), the moist residue, pressed or filtered on exit by the treatment according to the present invention, can be optionally subjected to a further stage of reduction of the moisture content by partial drying, by subjecting the residue coming out from dehydration to a partial drying under vacuum or with other known techniques. This may become advantageous because the exhausted residue coming out from the treatment is at a temperature of about 65°-75°C, at which point the water to be evaporated has a far from negligible vapour pressure, of about 200 mBar.

Example 3. Parameters which affect the results of the process

Effect of pH: with reference to figures 2 and 3, the following trends may be observed:

- in the acid oxidizing treatment: a value of pH=4.0 requires reaction times of around 120 minutes, while at a value of pH=2.5 the time required is only 60 minutes for the same result;
- in the alkaline oxidizing treatment: a pH value greater than 12.0 produces a series of such rapid reactions of degradation and/or conversion of the glucosidic molecules, released in the previous acidic environment, into saccharinic compounds, so as to make control of the reactions and repeatability of the trial very difficult. Furthermore, in this environment, degradation of the cellular proteins is noticeable, which are not only hydrolyzed to peptones, but also to amino acids, and the latter are then denatured so far as to lead to the subsequent release of the amino group ($-NH_2$), with the formation of free ammonia. A pH range comprised between 11.0 and 12.0 seems to be a good compromise, as the reaction times required are still relatively brief (less than 3 hours), but the control of the reaction and the reproducibility of the tests are satisfactory. For even lower pH values, comprised between 8 and 11, the reaction times required lengthen noticeably but, in compensation, control of the reaction improves.

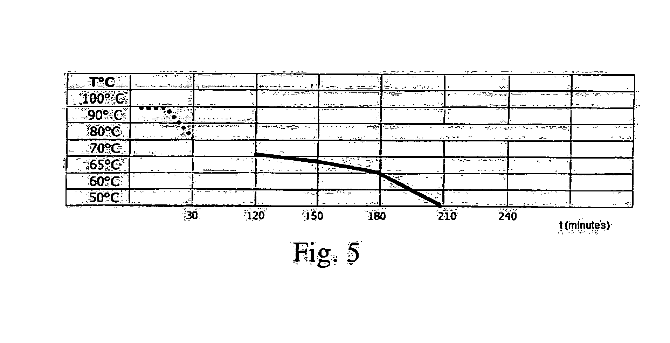

As regards the temperature, with reference to figures 4 and 5, the following trends may be observed:

a) in the acid oxidizing treatment, higher temperature values generally favour the reaction kinetics, particularly values higher than 70°C; by contrast, temperatures lower than 60°C require longer reaction times; it has also been noted that temperatures above 80-85°C tend to favour a pronounced darkening of the eluate, with the formation, probably, of Schiff bases, which can form in solution between saccharides and proteins or free amino acids;
b) in the alkaline oxidizing treatment, temperature values greater than 80°C produce complex reactions with rapid degradation, where control and repeatability (as already mentioned in connection with pH) are very difficult to control; a temperature range between 65°C and 70°C is therefore to be considered a good compromise, since the reaction is much more controllable and the reaction times required are still technically acceptable, as they are within 3 hours; for even lower temperature values, the reaction times lengthen excessively.

As regards the concentration of the acid and alkaline reagents, this is a direct function of the pH values chosen for operating, both in the acid and the alkaline range. The quantity of oxidizing agent(s) is, however, principally a function not only of the working pH but also of the type and quantity of oxidizable substances contained in the sludge treated. Consumption can be regulated, for example, by means of a redox meter, i.e. a measuring apparatus for the redox potential (E) expressed in mV.

In order for the process according to the invention to attain the best results in terms of quality, quantity and economy, considerable importance attaches to the progressive order of the various stages of treatment; the best results were obtained according to the scheme summarized in Table 1 below.

Table 1

| Stage | t (min) | T (°C) | pH |
|---|---|---|---|
| Mechanical breakdown | < 5 | 55 - 65 | 4.5 - 2.5 |
| Acid oxidizing hydrolysis | 60 - 90 | 65 - 70 | 2.5 - 3.5 |
| Alkaline oxidizing hydrolysis | 150 - 180 | 65 - 70 | 11.0 - 12.0 |
| Chemical conditioning | On-line | 60-65 | 3.0 - 4.5 |
| Sedimentation + filtration | On-line | 60-65 | 3.0 - 4.5 |
| Filtered eluate recirculation | On-line | 60-65 | 3.0 - 4.5 |

In terms of the qualitative and quantitative efficacy of the process of the invention, the sequence shown above, relating to the order of execution of the treatment stages is the one which provided the highest weight-minimization results, combined with the best quality of eluate. This sequence, in fact, represents a significant critical feature, in the sense that a marked deterioration in weight-minimization and qualitative results ensues, when the order of treatment of the stages is different from the one shown above, and in particular:
- when in the acid oxidizing hydrolysis stage the acid reagent is not used in a mixture with the oxidizing reagent, but either only the acid reagent or only the oxidizing reagent is used (but not the mixture of the two), for the same conditions of temperature and reaction time, as shown in Table 2 below.

Table 2

| Treatment performed | Average result for weight minimization |
|---|---|
| Complete acid oxidising treatment: sulphuric acid + peroxide | 38% |
| Treatment with sulphuric acid alone without peroxide | 13% |
| Treatment with peroxide alone without sulphuric acid | 7% |

- when in the alkaline oxidizing hydrolysis stage the alkaline reagent is not used in a mixture with the oxidizing reagent, but either only the alkaline reagent or only the oxidizing reagent is used (but not the mixture of the two), for the same conditions of temperature and reaction time, as shown in Table 3 below.

Table 3

| Treatment performed: | Average result for weight minimization |
|---|---|
| Complete alkaline oxidising treatment: sodium hydroxide + peroxide | 56% |
| Treatment with sodium hydroxide alone without peroxide | 23% |
| Treatment with peroxide alone | 7% |

- when the acid oxidizing hydrolysis stage is not performed before the alkaline oxidizing hydrolysis stage, but is performed subsequently to the latter, as shown in Table 4.

Table 4

| Steps order in the treatment performed | Average result for weight minimization |
|---|---|
| 1- acid oxidizing stage (90 minutes) <br> 2- alkaline oxidizing stage (180 minutes) | 84% |
| 1- alkaline oxidizing stage (180 minutes) <br> 2- acid oxidizing stage (90 minutes) | 63% |

The other stages of the treatment, which are auxiliary or finishing treatments, do not impact significantly on the total yield of the process.

Example 4. Characteristics of the eluate

The eluate, containing dissolved therein the final reaction products, may be recirculated on-line in the same depuration process where it mixes with the raw primary waste water (equalization tank, preliminary chemical conditioning) or sent to the biological section (active sludge, percolators, etc.).
The characteristics of the eluate obtained in the course of the tests are as follows:

A - Organoleptic characteristics

Appearance: transparent liquid;
Colour: from vinous light amber to medium-dark amber;
Odour: light and pleasant, like a bakery.

B - Typical qualitative composition

Proteins and/or peptones and/or free amino acids; oligosaccharides and lower polysaccharides; phospholipids; free fatty acids; sulphate anion; chloride anion; ammonia nitrogen Total biodegradability > 95%.

Furthermore, the following compounds are absent: nitrous nitrogen; nitric nitrogen; aldehydes, chetones and alcohols; aromatic organic compounds; chlorinated organic compounds; esterified oils and fats; synthetic surfactants; phenols and polyphenols; whereas the following are present in limited quantities: copper (<0.01 mg/litre) and other transition elements (< 0.01 mg/litre).

The recirculated eluate is therefore an excellent nutrient for biomass and this makes it possible to eliminate any other substances added as nutrients. The biodegradability of the organic solutes contained therein, furthermore, improves the BOD/COD ratio.

Example 5. Organic and hydraulic overload produced by the recirculated eluate

Because of the recirculation of the eluate into the biological depuration plant on site, the latter usually results to be overloaded as indicated in Table 5 below, taking account of an average recirculation coefficient of 1:150 as a ratio between the flow rate of the incoming waste water (Qin) and the flow rate of the recirculated eluate (Qe).

Table 5

| Parameters | Units | Average value |
|---|---|---|
| COD | mg/l | + 40 |
| BOD20/COD | % | > 95 |
| Sulphate anion (S04) | mg/l | + 17 |
| Chloride anion (Cl) | mg/l | +10 |
| Total phosphorus (P) | mg/l | < 1 |
| Ammonia nitrogen (NH3) | mg/l | + 4.3 |

From this we may deduce that the organic overload to the primary depuration process is altogether negligible and that, furthermore, it can be considered as falling completely within the normal fluctuations of incoming waste water, both in the civil and in the industrial field.

As regards the hydraulic overload, the process according to the present invention does not use any other water than that which is already present in the treated sludge itself, which proves, therefore, to be totally sufficient for the process. Moreover, the volume of the reagents used should be added, which is equal to about 2% of the volume of treated sludge. Consequently, the total quantity of aqueous solution entering the depuration cycle is practically the same as that present in a biological depuration process of conventional type, as the thickened and dehydrated excess sludge is sent directly to the final pressing and the liquid released from the pressate is recirculated in the process.

Example 6. Characteristics of the exhausted residue of the process

Unlike all the other technologies known and in use, whose process residues are classified as hazardous special waste (except for the biocomposting process, which does not fall into the same category as these), the process of the present invention provides a residual sludge which, if present, has characteristics such that it can be scattered on the soil as an improver/fertilizer.

By way of example, Table 6 shows a comparative examination of thickened excess biological sludge, from the workings of a chemical-textile-dyeing industry, before and after treatment by the process of the present invention.

Table 6

| Parameter | Units | Initial sludge | Treated sludge |
|---|---|---|---|
| Anoxic putrescibility (72h) | - | strong | absent |
| Visual appearance of the pressate | - | moist and gelatinous | similar to wet soil |
| Stickiness to the touch | - | very high | absent |
| Tackiness of the pressate | - | very high | absent |
| Gooch (G2) filterability | - | difficult with obstruction | rapid and total (<20") |
| Residue at 550°C | % | 2.0 | 1.2 |
| Organic Carbon (TOC) | % | 32 | 24 |
| Total nitrogen (N) | % | 2.1 | 2.0 |

(continued)

| Parameter | Units | Initial sludge | Treated sludge |
|---|---|---|---|
| Total phosphorus (P) | % | 0.8 | 0.6 |
| Chlorinated org. solvents | mg/kg | <5 | absent |
| Aromatic org. solvents | mg/kg | <5 | absent |
| Mineral oils | mg/kg | <10 | absent |
| Total Potassium | mg/kg SS | 2400 | 1900 |
| Cadmium (Cd) | mg/kg SS | <1 | <1 |
| Total chromium | mg/kg SS | 40 | <10 |
| Chromium VI | mg/kg SS | <1 | <1 |
| Mercury (Hg) | mg/kg SS | <1 | <1 |
| Nickel (Ni) | mg/kg SS | 38 | <10 |
| Lead (Pb) | mg/kg SS | 190 | <30 |
| Copper (Cu) | mg/kg SS | 80 | <10 |
| Zinc | mg/kg SS | 210 | 110 |
| Total microbial charge | MPN/g SS | $>10^6$ | <10 |
| Salmonella | MPN/g SS | 195 | 5 |

As appears clearly from the data reproduced above, in spite of being a solely industrial sludge, deriving from the biological treatment of a purely chemical waste water from a chemical industry in the textile-dyeing sector, and therefore with a high pollutant charge, with pollutants very resistant to biodegradation, the residue from the treatment has an excellent chemical and biological profile, which allows it to be used both as a compostable product and as a soil improver/fertilizer, which can be scattered directly on the soil, in accordance with the provisions of the applicable law.

Example 7. Further minimization of the residue

The sludge remaining from the treatment, when present, after pressing has a visual appearance appreciably different from that of the traditional non-treated product, in that it displays a shovellability/friability markedly superior to the latter (easily noticeable visually but also to the touch), by comparison with which it possesses a clearly superior concentration of dry matter, generally double the initial content. This new quality of residue, which is produced following the treatment according to the present invention, imparts particularly favourable characteristics to the final residue, since it appears as an inert exhausted substance, odourless, extremely friable, and without any tendency to stick. These physical characteristics are extremely favourable if it is desired to subject this residue to further concentration of the dry matter, by drying, i.e. partial or total evaporation of the absorbed moisture remaining therein. This operation would be furthermore favoured by the possibility of exploiting the heat which the residue itself already possesses on exit, being at a temperature of 60-70°C.

Some further advantages, not secondary, relating to the present invention, are set forth below.

Removal of biotoxic compounds

Numerous residual organic substances with low biodegradability, or even with inhibiting activity of the active biomass, possibly deriving from industrial processes on site, very often are not successfully destroyed by the biological process, and therefore can still be present, and indeed be concentrated in the excess sludge which incorporates them. They can, therefore, exercise both a marked biotoxic action or, at any rate, have an inhibiting effect on the activity of the biomass, and also have an irritant and/or toxic effect on the personnel employed on the site. Among these substances are the following: bactericides, bacteriostatic agents, fungicides, antifermentatives, antioxidants, moth repellents and antimould compounds, anticryptogamics, antiparasitics, defoliants, formaldehyde and its precursors, simple and complex phenols, polyphenols and derivatives, polycyclic compounds, quaternary ammonium salts, etc. The process according to the invention makes it possible, in the majority of cases treated, to make these substances totally inoffensive, because it is capable of modifying their chemical structure and negating their effectiveness.

EP 2 342 164 B1

Abatement of the microbial charge

One of the most serious problems connected with handling, storing and using excess sludge is the presence of a very high and variegated charge of microbes, microflora and microfauna, some of them pathogenic, their concentration tending to rapidly multiply by cell-division, both (especially) in fresh liquid sludge, but also in moist pressed sludge. This is because of the considerable presence of organic and inorganic substances that are still strongly putrescible (proteins, fats, polysaccharides, phosphorylating substances and/or azotates, sulphates, nitrites and nitrates) contained therein and susceptible of being reduced by reducing bacteria, which are unfailingly present, to ammonia, sulphites, sulphides, phosphine, methane, carbon monoxide, etc. An important index of biological fermentation in progress, i.e. of the growth of the microbial charge, is certainly represented by the characteristic putrescent odour which usually develops on stored sludge, especially in liquid form, but also dehydrated. The process according to the present invention is capable of destroying more than 99.999% of the total microbial charge (microflora and microfauna), because it is capable of breaking down even the intra-cellular content. Microscopic observation of the residue after treatment is sufficient to demonstrate this capacity of the process.

Simplification of the depuration process

The traditional biological depuration process invariably requires the excess sludge produced to be pre-thickened before being dehydrated. This is because of the presence in the sludge of organic matter which is stickier, more putrescible and more mechanically resistant to pressing, the more recently it was formed. In fact, these substances are, in general, also the very same ones that most obstruct the process of final dehydration, because of a high content of natural bio-polymers, which are believed to be the endogenous product of the biomass itself.
The process according to the present invention has been shown to be particularly effective in modifying and extracting these substances, which has the following practical consequences:

- improving the filterability or final pressing of the residue;
- obtaining a residue with a higher dry matter content;
- being able to also treat directly the pumpable excess sludge which has not been subjected to thickening, but extracted directly from the biological sedimentation tank, with the same results as are obtained on the pre-thickened sludge, thus avoiding the entire thickening stage;
- being able to treat the moist, pressed, shovellable sludge in the same way and with the same results as have been indicated.

The present invention has been described by way of non-limiting illustration, according to its preferred embodiments, but it must be understood that variations and/or modifications can be made by experts in the field without for this reason departing from the invention protective scope, as defined by the attached claims.

**Claims**

1. Process for the disposal of wastes, comprising:

   - performing an acid oxidizing hydrolysis of the incoming waste (charge);
   - performing an alkaline oxidizing hydrolysis of the outgoing mass from the acid oxidizing hydrolysis;
   - chemically conditioning the outgoing mass from the alkaline oxidizing hydrolysis by adding an acid reagent;
   - separating undissolved residue, if any, by sedimentation or direct filtration.

2. Process according to claim 1, wherein the wastes to be disposed are sludges deriving from the depuration of waste waters.

3. Process according to claim 2, comprising also recirculating the eluate obtained from the separation stage in the process of depuration from which the incoming charge came.

4. Process according to any one of the preceding claims, further comprising a preliminary stage of mechanical breakdown of the incoming charge.

5. Process according to any one of the preceding claims, further comprising, subsequently to the stage of alkaline oxidizing hydrolysis, a stage of separation of the insoluble metal hydroxides.

6. Process according to any one of the preceding claims, wherein the stage of acid oxidizing hydrolysis is performed at a pH value of 0.1 to 5.0, preferably of 2.5 to 3.5.

7. Process according to any one of the preceding claims, wherein the stage of acid oxidizing hydrolysis is performed at a temperature of 35° to 100°C, preferably of 60° to 75°C.

8. Process according to any one of the preceding claims, wherein the stage of acid oxidizing hydrolysis is performed by inclusion in the mass of molecular oxygen and/or of an organic or inorganic peroxide oxidizing agent.

9. Process according to any one of the preceding claims, wherein the stage of alkaline oxidizing hydrolysis is performed at a pH value of 8.0 to 12.0.

10. Process according to any one of the preceding claims, wherein the stage of alkaline oxidizing hydrolysis is performed at a temperature of 40° to 100°C, preferably of 60° to 75°C.

11. Process according to any one of the preceding claims, wherein the stage of alkaline oxidizing hydrolysis is performed by inclusion in the mass of molecular oxygen and/or of an organic or inorganic peroxide oxidizing agent.

12. Process according to any one of the preceding claims, wherein the stage of chemical conditioning is carried out by adding an acid reagent so as to reach a pH value of 3.5 to 4.5.

13. Process according to any one of the preceding claims, wherein after the stage of separation the residue is subjected to dehydration.

**Patentansprüche**

1. Verfahren zur Abfallentsorgung, umfassend:

   - Ausführen einer sauren oxidierenden Hydrolyse des zugeführten Abfalls (Charge);
   - Ausführen einer alkalischen oxidierenden Hydrolyse der aus der sauren oxidierenden Hydrolyse hervorgehenden Masse;
   - chemisches Konditionieren der aus der alkalischen oxidierenden Hydrolyse hervorgehenden Masse durch Zugabe eines sauren Reagenzes;
   - Trennen des ungelösten Rests, falls vorhanden, durch Sedimentation oder Direktfiltration.

2. Verfahren nach Anspruch 1, wobei die zu entsorgenden Abfälle die von der Reinigung von Abwässern stammenden Schlämme sind.

3. Verfahren nach Anspruch 2, das auch das Wiederinumlaufbringen des Eluats umfasst, das durch die Trennphase im Reinigungsverfahren erhalten wurde, von dem die zugeführte Charge kam.

4. Verfahren nach einem der vorhergehenden Ansprüche, das ferner eine vorausgehende Phase des mechanischen Aufschlusses der zugeführten Charge umfasst.

5. Verfahren nach einem der vorhergehenden Ansprüche, das ferner im Anschluss an die Phase der alkalischen oxidierenden Hydrolyse eine Phase zum Trennen der unlöslichen Metallhydroxide umfasst.

6. Verfahren nach einem der vorhergehenden Ansprüche, bei dem die Phase der sauren oxidierenden Hydrolyse bei einem pH-Wert von 0,1 bis 5,0, vorzugsweise von 2,5 bis 3,5, ausgeführt wird.

7. Verfahren nach einem der vorhergehenden Ansprüche, bei dem die Phase der sauren oxidierenden Hydrolyse bei einer Temperatur von 35°C bis 100°C, vorzugsweise von 60°C bis 75°C, ausgeführt wird.

8. Verfahren nach einem der vorhergehenden Ansprüche, bei dem die Phase der sauren oxidierenden Hydrolyse durch Einschluss von molekularem Sauerstoff und/oder eines organischen oder anorganischen Peroxid-Oxidationsmittels in die Masse ausgeführt wird.

**9.** Verfahren nach einem der vorhergehenden Ansprüche, bei dem die Phase der alkalischen oxidierenden Hydrolyse bei einem pH-Wert von 8,0 bis 12,0 ausgeführt wird.

**10.** Verfahren nach einem der vorhergehenden Ansprüche, bei dem die Phase der alkalischen oxidierenden Hydrolyse bei einer Temperatur von 40°C bis 100°C, vorzugsweise von 60°C bis 75°C, ausgeführt wird.

**11.** Verfahren nach einem der vorhergehenden Ansprüche, bei dem die Phase der alkalischen oxidierenden Hydrolyse durch Einschluss von molekularem Sauerstoff und/oder eines organischen oder anorganischen Peroxid-Oxidationsmittels in die Masse ausgeführt wird.

**12.** Verfahren nach einem der vorhergehenden Ansprüche, bei dem die Phase der chemischen Konditionierung durch Zugabe eines sauren Reagenzes ausgeführt wird, um einen pH-Wert von 3,5 bis 4,5 zu erreichen.

**13.** Verfahren nach einem der vorhergehenden Ansprüche, bei dem der Rest nach der Trennphase der Entwässerung unterzogen wird.

## Revendications

**1.** Procédé pour l'élimination de déchets comprenant :

- l'exécution d'une hydrolyse oxydante acide des déchets (charge) en entrée ;
- l'exécution d'une hydrolyse oxydante alcaline de la masse en sortie provenant de l'hydrolyse oxydante acide ;
- le conditionnement chimique de la masse en sortie provenant de l'hydrolyse oxydante alcaline par ajout d'un réactif acide ;
- la séparation du résidu non dissous, s'il existe, par sédimentation ou filtration directe.

**2.** Procédé selon la revendication 1, dans lequel les déchets à éliminer sont des boues provenant de l'épuration des eaux usées.

**3.** Procédé selon la revendication 2, comprenant également la recirculation de l'éluat obtenu à partir de l'étape de séparation dans le processus d'épuration duquel est arrivée la charge en entrée.

**4.** Procédé selon l'une quelconque des revendications précédentes, comprenant en outre une étape préliminaire de rupture mécanique de la charge en entrée.

**5.** Procédé selon l'une quelconque des revendications précédentes, comprenant en outre, successivement à l'étape d'hydrolyse oxydante alcaline, une étape de séparation des hydroxydes métalliques insolubles.

**6.** Procédé selon l'une quelconque des revendications précédentes, dans lequel l'étape d'hydrolyse oxydante acide est effectuée à une valeur de pH de 0,1 à 5,0, de préférence de 2,5 à 3,5.

**7.** Procédé selon l'une quelconque des revendications précédentes, dans lequel l'étape d'hydrolyse oxydante acide est effectuée à une température de 35° à 100°C, de préférence de 60° à 75°C.

**8.** Procédé selon l'une quelconque des revendications précédentes, dans lequel l'étape d'hydrolyse oxydante acide est effectuée par inclusion dans la masse d'oxygène moléculaire et/ou d'un agent oxydant peroxyde organique ou inorganique.

**9.** Procédé selon l'une quelconque des revendications précédentes, dans lequel l'étape d'hydrolyse oxydante alcaline est effectuée à une valeur de pH de 8,0 à 12,0.

**10.** Procédé selon l'une quelconque des revendications précédentes, dans lequel l'étape d'hydrolyse oxydante alcaline est effectuée à une température de 40° à 100°C, de préférence de 60° à 75°C.

**11.** Procédé selon l'une quelconque des revendications précédentes, dans lequel l'étape d'hydrolyse oxydante alcaline est effectuée par inclusion dans la masse d'oxygène moléculaire et/ou d'un agent oxydant peroxyde organique ou inorganique.

**12.** Procédé selon l'une quelconque des revendications précédentes, dans lequel l'étape de conditionnement chimique est exécutée en ajoutant un réactif acide de manière à atteindre une valeur de pH de 3,5 à 4,5.

**13.** Procédé selon l'une quelconque des revendications précédentes, dans lequel, après l'étape de séparation, les résidus sont soumis à une déshydratation.

Fig. I

**Fig. 2**

**Fig. 3**

**Fig. 4**

Fig. 5